Europäisches Patentamt

European Patent Office

Office européen des brevets

(11) Publication number : **0 479 559 A1**

## (12) EUROPEAN PATENT APPLICATION

(21) Application number : **91308994.2**

(22) Date of filing : **01.10.91**

(51) Int. Cl.⁵ : **B67C 3/20, G01F 11/02**

(30) Priority : **03.10.90 IE 3200/90**

(43) Date of publication of application :
**08.04.92 Bulletin 92/15**

(84) Designated Contracting States :
**AT BE CH DE DK ES FR GB GR IT LI LU NL SE**

(71) Applicant : **FLOTECH LIMITED**
**Woods House, Carysfort Avenue**
**Blackrock, County Dublin (IE)**

(72) Inventor : **Howe, Patrick**
**15 Palmerstown Green**
**Dublin 20 (IE)**

(74) Representative : **Woodward, John Calvin et al**
**VENNER SHIPLEY & CO. 368 City Road**
**London EC1V 2QA (GB)**

(54) **Apparatus for filling containers with a liquid.**

(57) An apparatus for filling containers with a liquid comprises a filler head (10) having a closable nozzle (12/13) and a displacement cylinder (14) having a power-actuated reciprocating piston (15). The cylinder is operatively connected to the filler head (10) and, through a non-return valve (18), to a storage container (19) for the liquid. A programmable logic controller (21) selects and controls the opening and closing times of the nozzle (12/13) and the length and timing of the piston forward and return strokes such that a measured amount of liquid from the storage container (19) is fed through the cylinder (14) to the filler head (10) and thence through the nozzle (12/13) to a container. The apparatus is controlled at the end of filling a container such that liquid remaining in the nozzle is drawn back into the filler head, in order to prevent dripping.

FIG. 1

This invention relates to an apparatus for filling containers, such as bottles, with a liquid.

Pneumatic filler heads for filling containers with a liquid are already well known. The known filler heads have associated with them timers which regulate the pneumatic system on a predetermined time scale to open and close on the said time scale the nozzle or valve of the filler head to allow liquid product to flow from the head into a container. The amount of liquid product passing into the container being determined by the length of time the filler head nozzle or valve is held in an open position by the associated pneumatic system.

The present invention seeks to improve upon the known filler head system by providing in operative association with a filler head system a displacement cylinder with a power-actuated piston which in use operates to feed liquid product in measured amounts to the filler head system.

The present invention provides an apparatus for filling containers with a liquid, comprising at least one filler head having a closable nozzle, a displacement cylinder having a power-actuated reciprocating piston, the cylinder being connected to the filler head and, through a non-return valve, to a storage container for the liquid, and timing means for controlling the opening and closing of the nozzle and for controlling the length and timing of the piston forward and return strokes such that a measured amount of liquid from the storage container is fed through the cylinder to the filler head and thence through the nozzle to a container.

Preferably, the apparatus incorporates a plurality of spaced apart filler heads associated with the same displacement cylinder and all controlled by the same timing means. The timing means is preferably a programmable logic controller programmed to adjust the timed opening and closing sequence of the nozzle(s) and to adjust the stroke and timing of the piston, in dependence upon the number of filler heads in use, the amount of liquid to be filled into each container and the desired filling speed.

The invention will be understood from the following description of embodiments thereof given by way of example only with reference to the accompanying drawings in which :

Figure 1 is a diagram illustrating a first embodiment of the invention;

Figure 2 is an enlarged cross-section of a slightly modified filler head which may be used in the embodiment of Figure 1,

Figure 3 is a diagram illustrating a second embodiment of the invention;

Figure 4 is a diagram of a modified form of filler head which may be used in the Figure 3 embodiment;

Figure 5 is a diagram illustrating a third embodiment of the invention; and

Figures 6(a), 6(b) and 6(c) are timing diagrams illustrating the operation of the first and second embodiments.

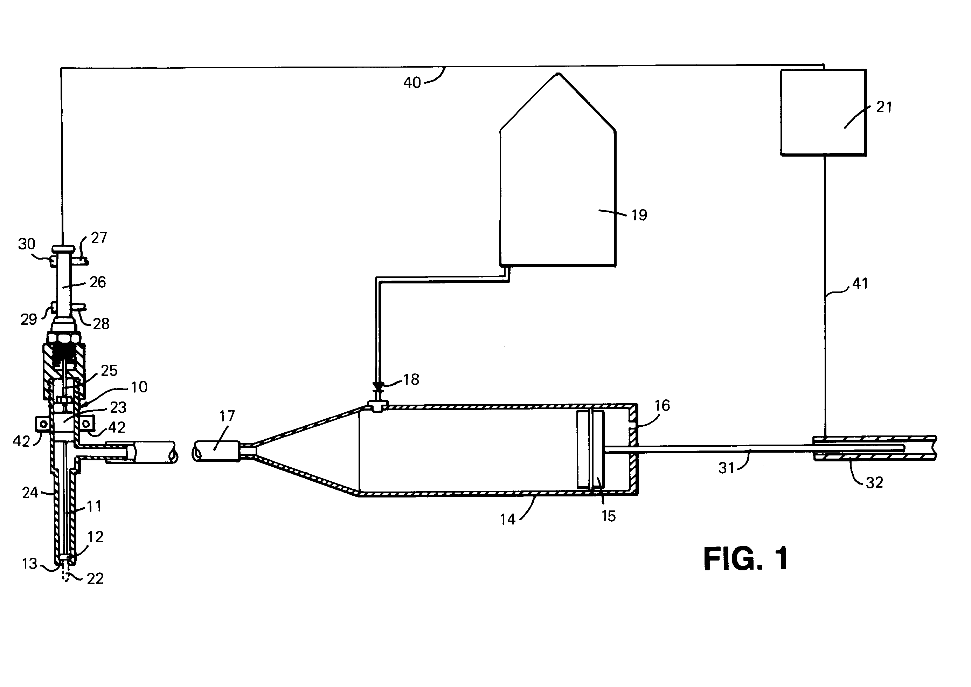

Referring to Figure 1 of the drawings the apparatus comprises a conventional pneumatically operated stainless steel filler head 10 having a reciprocating piston 23 which drives a reciprocating stainless steel rod 11 with a valve head 12 which cooperates with a valve seat 13 at the lower end of a hollow nozzle 24 to provide a closable filler head nozzle. The valve head 12 is preferably a viton o-ring or a rubber washer mounted on a flat rigid back plate carried by the rod 11.

The piston 23 is rigidly coupled by a piston rod 25 to the piston (not shown) of a pneumatic cylinder 26. The pneumatic cylinder 26, which may be of a conventional construction, comprises ports 27 and 28 which are connected to a constant 50 psi source of compressed air (not shown). Each port 27 and 28 has associated therewith a respective solenoid-operated valve (also not shown), and by opening and closing the solenoid-operated valves in an appropriate combination the piston in the pneumatic cylinder can be caused to make a forward (i.e. downward in Figure 1) stroke in the cylinder 26 to close the nozzle valve 12/13 or a reverse (upward) stroke in the cylinder 26 to open the nozzle valve 12/13.

Further, the piston in the pneumatic cylinder 26 carries a magnet which at predetermined positions of the piston will close respective reed proximity switches 29 and 30, located towards the front and rear respectively of the cylinder 26. These predetermined positions of the piston in the cylinder 26 constitute datum positions for control of the piston stroke, and closure of a particular reed switch will signal to a programmable logic controller (PLC) 21 that the piston has reached the corresponding datum position. This enables the PLC 21 to control the operation of the solenoid-operated valves of the pneumatic cylinder 26, to open and close the nozzle valve 12/13 at the appropriate times.

Associated with the filler head 10 is a displacement cylinder 14 having a reciprocating piston 15. The cylinder 14 has an air vent 16 and is connected to the filler head 10 by a pipe member 17. The cylinder 14 is connected through a non-return valve 18 to a liquid product storage container 19.

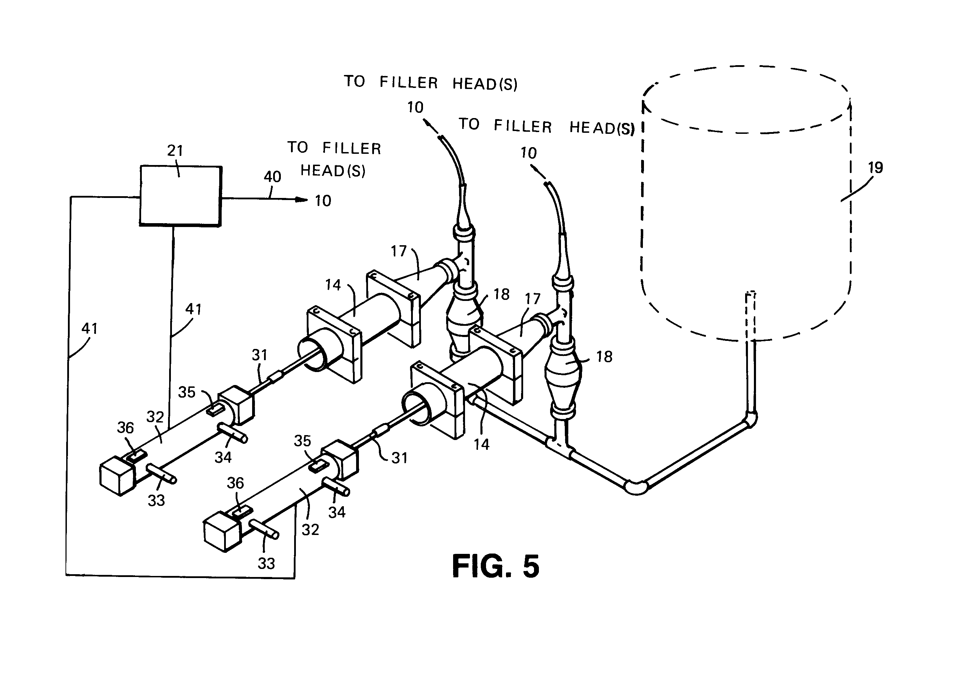

Similarly to the piston 23, the piston 15 is rigidly coupled by a piston rod 31 to the piston (not shown) of a pneumatic cylinder 32. The pneumatic cylinder 32, which may also be of conventional construction (see Figure 5 which shows two such cylinders 32), likewise comprises ports 33 and 34 which are connected to a constant 50 psi source of compressed air and each of which has associated therewith a respective solenoid-operated valve. In this case, by opening and closing the valves in an appropriate combination the piston in the pneumatic cylinder 32 can be caused to make a forward (i.e. leftward in Figure 1, rightward in Figure 5) stroke in the cylinder 32 to drive the piston 15 to the left in the cylinder 14 and hence expel liquid in the cylinder 14 through the pipe 17 to the filler head 10, or a reverse (rightward in Figure 1, leftward in Figure 5) stroke in the cylinder 32 to draw liquid into the cylinder 14 from the storage container 19 through the non-return valve 18.

Further, the piston in the pneumatic cylinder 32 also carries a magnet which at predetermined datum positions of the piston will close respective reed proximity switches 35 and 36, located towards the front and rear respectively of the cylinder 32, the reed switches signalling the position of the piston in the pneumatic cylinder 32 to the PLC 21 to enable PLC 21 to control the operation of the cylinder 32.

The pneumatic cylinders 26 and 32, and the general principles by which such cylinders may be controlled using sensors and solenoid-operated valves, is well-known, and no further description thereof is thought necessary.

As mentioned above, the operation of the apparatus shown in Figure 1 is under the control of the PLC 21, which may for example be a Telemechanique TSX 17. The PLC 21 is programmed to control the filling cycle for a container, such as a bottle, located beneath the nozzle of the filling head 10 by opening and closing the solenoid-operated valves associated with each cylinder 26 and 32 at times determined by the inputs from the sensors 29, 30, 33 and 34. As mentioned above, the general principles of such control are well known, and it is therefore to be understood that the single lines 40 and 41 shown connecting the PLC 21 to the cylinders 26 and 32 are merely a schematic representation of the multiple independent lines which connect the PLC 21 to the solenoid-operated valves and the sensors at each cylinder.

In use if one is starting a production run to fill a substantial number of bottles with, e.g. 200 ml of liquid product, such as shampoo, the relevant information regarding the amount of product (200 ml) to be filled into each bottle is fed to the PLC 21. The valve 12/13 is then opened and the pneumatic cylinder 32 actuated to move the piston 15 within the cylinder 14 to force air out through the nozzle valve 12/13. The valve 12/13 is closed and the piston 15 retracted to draw liquid product from the storage tank 19 via the valve 18 into the cylinder 14. This process is repeated a few times in order to ensure that all air is expelled from the apparatus and to have liquid product in the filler head 10 and cylinder 14. When this has been achieved the apparatus is started into the production run proper with liquid product being fed from the storage tank 19 via the cylinder 14 and filler head 10 into each bottle in a predetermined measured amount under the control of the PLC 21.

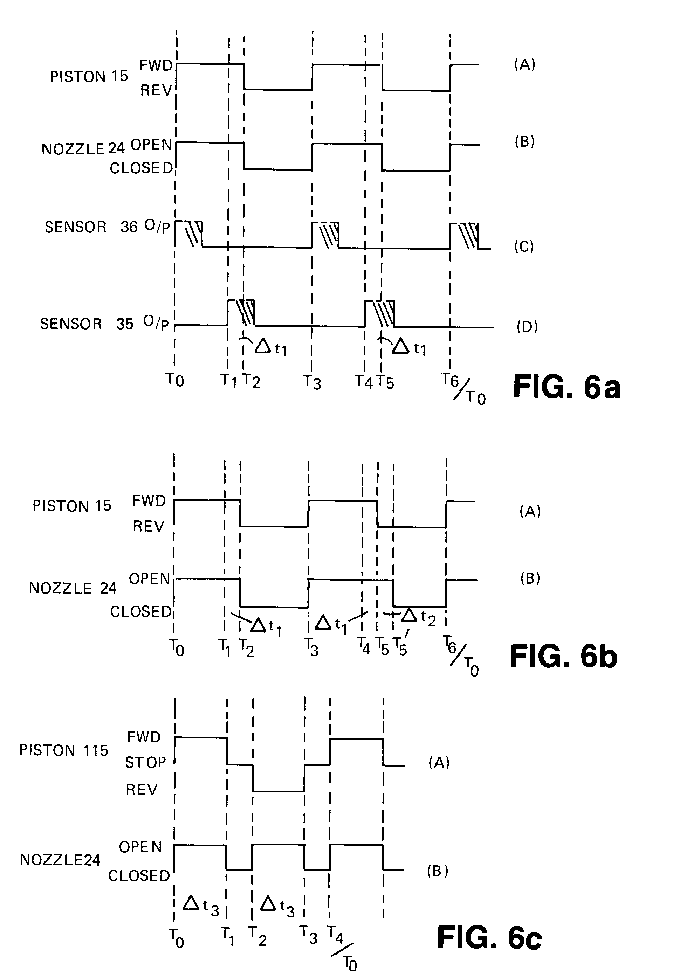

Figure 6(a) is a timing diagram showing the operation of the apparatus over a bottle filling cycle. Line A shows the direction of movement (forward or reverse) of the piston 15 in the cylinder 14, and since the piston 15 is driven by the pneumatic cylinder 32 line A also represents the movement of the piston in the cylinder 32. Line B shown the state of the nozzle valve 12/13 (open or closed). In line B it is assumed that the movement of the piston in the pneumatic cylinder 26 which operates the valve 12/13 is very much more rapid than the movement of the piston in the cylinder 32; hence the transition between open and closed is shown as a vertical line in line B. Line C shows the input to the PLC 21 of the rear sensor 36 on the pneumatic cylinder 32, and line D shows the input to the PLC 21 of the front sensor 35. Only the leading edges of the signals from the sensors 35 and 36 are significant for the PLC 21 and the trailing edges are shown hatched.

The start of a filling cycle occurs at time $T_0$ in Figure 6(a). Immediately prior to $T_0$ it is assumed that the piston 15 is moving in reverse (retracting) and the nozzle valve 12/13 is closed. At $T_0$ the piston in the cylinder 32 reaches its rear datum position and the rear sensor 36 provides a signal to the PLC 21. In response to this signal the PLC 21 by appropriate control of the solenoid-operated valves associated with the pneumatic cylinder 32 changes the direction of motion of the piston 15 so that it is now put into a forward stroke, and also opens the nozzle valve 12/13.

The piston 15 now moves steadily forward, expelling liquid product from the cylinder 14 through the pipe 17 to the filler head 10 where it is discharged from the nozzle 24 into a bottle (not shown) located below the nozzle. The non-return valve 18 prevents liquid in the cylinder being returned to the container 19.

At time $T_1$ the piston in the cylinder 32 reaches its forward datum position, and the sensor 35 provides a signal to the PLC 21. However, the piston 15 continues to move forward for a further time period $\Delta t_1$ until time $T_2$.

At this point the PLC 21 drives the piston 15 into reverse once again, and closes the nozzle valve 12/13. During the reverse stroke, from $T_2$ to $T_3$, liquid from the container 19 is drawn into the cylinder 14. Clearly, during this reverse stroke the closed nozzle 24 prevents air being drawn into the apparatus.

At time $T_3$ the piston 15 once again goes into a forward stroke and the nozzle 24 is opened. During the period from time $T_3$ to $T_6$ the same events occur as during the period from time $T_0$ to $T_3$, i.e. one forward stroke of the piston 15 to time $T_5$ and one reverse stroke of the piston 15 to time $T_6$.

It is assumed in this example that the bottle requires two forward strokes of the piston 15 to be filled with the proper amount of liquid, e.g. 200 ml. Hence the bottle will be filled at time $T_5$. This leaves the period from $T_5$ to $T_6$ for the filled bottle to be replaced by an empty one, although a dwell or wait period can be introduced if a longer time to change over bot-

tles is needed.

Time $T_6$ is the start of the next filling cycle, whereupon the foregoing repeats for the next bottle.

It is here assumed that irrespective of the capacity of the bottle to be filled, on each forward stroke of the piston 15 it always makes a "standard" length of stroke, corresponding to the distance travelled during the period from $T_0$ to $T_1$ or from $T_3$ to $T_4$, and then in each case travels forward a further distance during the time period $\Delta t_1$. This further time period $\Delta t_1$ is a variable whose value for any particular filling run is selected by the PLC 21 according to the amount of liquid which is to be put into each bottle.

Further, although the above example uses two forward strokes of the piston 15 to fill a bottle, one can use only one such forward stroke, or more than two such strokes. For example, in a case where the capacity of a bottle is such that it cannot be accommodated only by varying $\Delta t_1$, the PLC 21 can be programmed also to select the number of forward strokes of the piston 15 per bottle fill, according to the capacity of the bottle. Thus one can use the same apparatus for filling containers with different amounts of liquid e.g. 100 ml, 200 ml, 300 ml, by varying the length and/or number of strokes of the piston per filling cycle.

Referring again to Figure 1, the nozzle 24 is preferably provided with a nozzle extension or tip 22 - shown in dotted outline. This extension 22 has a particular use when one is filling containers with "heavy" liquids such as sauces and creams. A current problem associated with filling containers with liquids such as sauces and creams is that one often finds that liquid product from one fill will adhere to the nozzle after the valve 12/13 closes and then drip from the nozzle onto the next container placed beneath the filler head. The said container is in these circumstances often marked and rendered unsightly and unhygienic by such product drip. Also labelling of filled containers is a problem if product drip is one the containers.

The nozzle extension 22 in use is part of the filler head 10 and therefore contains liquid product. In use the piston 15 is retracted slightly before, say one tenth of a second before, the valve 12/13 closes. The suction created draws back the liquid in the nozzle extension 22 upward in the nozzle extension 22 and prevents any drip at the end of the nozzle. The draw back of liquid product within the nozzle extension 22 must be such that product is always present in the nozzle extension. Any complete draw back of liquid product past the valve 12/13 would not be acceptable since this would introduce air into the apparatus. The suction time may be varied to take account of the viscosity of the liquid.

Figure 6(b) is a modification of the timing diagram of Figure 6(a), showing the operation of the apparatus of Figure 1 with draw back of liquid in the nozzle 24. Only lines A and B are shown in Figure 6(b), corresponding to lines A and B of Figure 6(a). It will be seen that the closing of the nozzle 24 is delayed until the time $T_5'$, which occurs a short period $\Delta t_2$ after time $T_5$ which is the point where the piston 15 goes into reverse after the forward stroke from $T_3$ to $T_5$. In other respects the diagram of Figure 6(b) is the same as Figure 6(a).

The duration of the draw back period $\Delta t_2$ may be selected by the PLC 21, as a function of the viscosity of the liquid which can be input as another variable to the PLC 21.

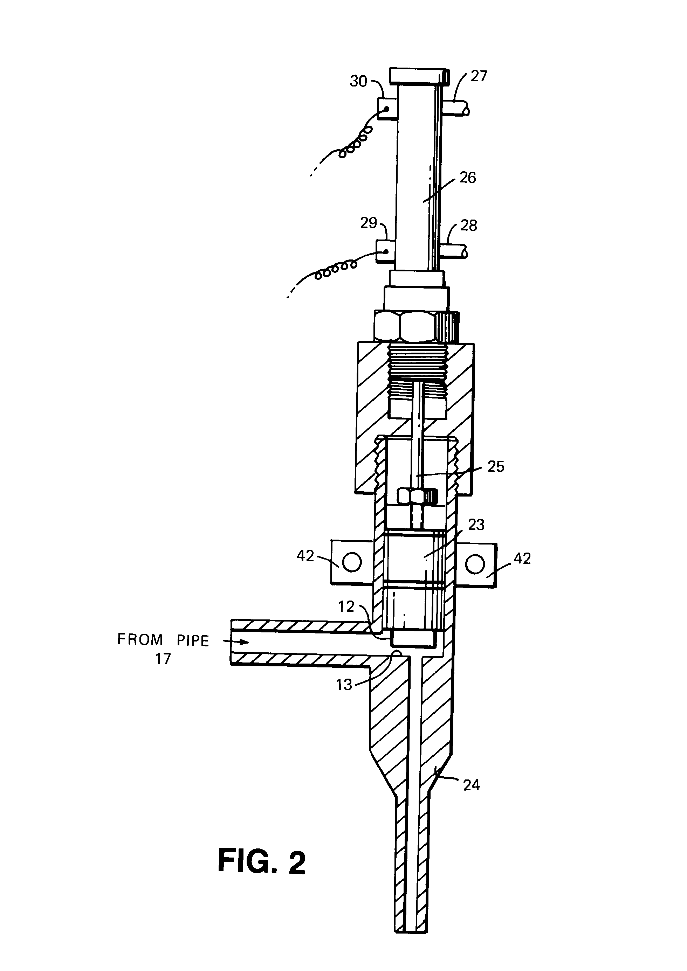

Referring now to Figure 2, this shows, to an enlarged scale compared to Figure 1, a modified form of filler head which may be used in the embodiment of Figure 1. The difference is that the valve head 12 is directly mounted on the lower end of the piston 23, and the valve seat 13 is provided at the top end of the nozzle 24. In this case the nozzle extension 22 is not necessary. In all other respects the filler head is the same as that shown in Figure 1. The brackets 42 serve to mount the filler head to a suitable support frame.

The embodiment above has been basically described in relation to the use of one filler head. It will be understood that a plurality of spaced apart filler heads 10 may be used, all associated with the same cylinder 14 and controlled in common by the PLC 21.

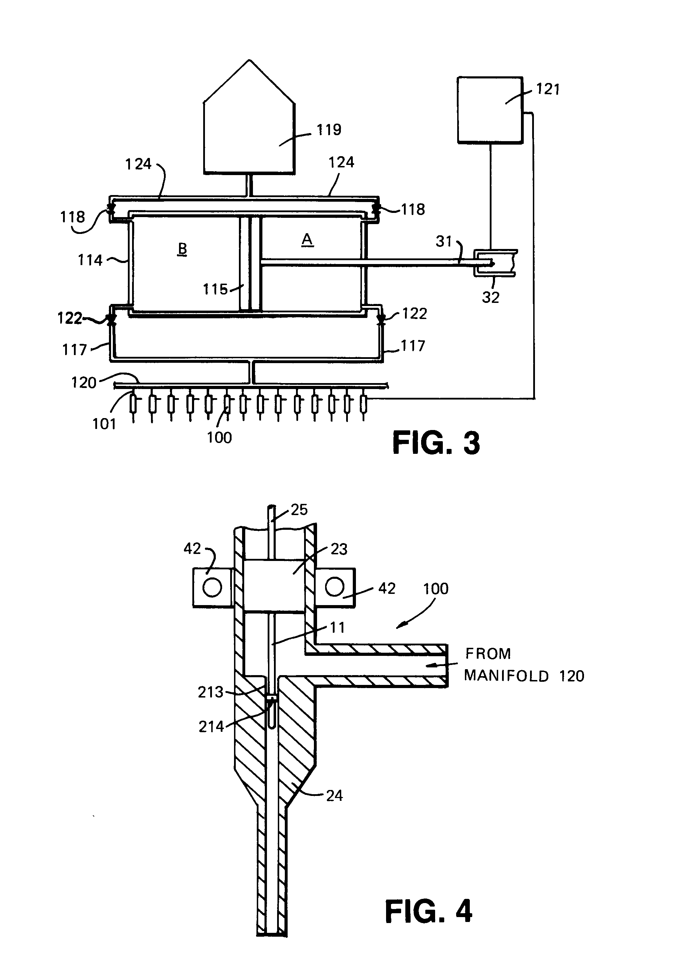

A second embodiment of the invention is shown in Figure 3 and provides for the filling of a measured quantity of product into a plurality of containers through a plurality of filler heads all operatively associated with a manifold which is fed with a measured amount of product for the filling of the plurality of containers from a cylinder which in this embodiment is adapted to act as a double acting cylinder such that the forward and back stroke of the piston serves to feed the measured quantity of product from the cylinder to the manifold and then into the plurality of containers.

Referring to Figure 3 of the accompanying drawings the apparatus shown incorporates a double acting displacement cylinder 114 having a piston 115 powered, as in the first embodiment, by a pneumatic cylinder 32. Both ends of the cylinder 114 are connected by pipes 122 to a liquid product storage tank 119. The cylinder 114 is also connected at each end through pipes 117 to a manifold 120 which has twenty (20) outlet filler heads 100 which have the same construction and manner of operation as the filler head 10 of the first embodiment. The pipes 101 connecting the manifold 120 to each filler head 100 should all have a common length and orientation to ensure a balanced flow to the heads 100. The pipe connections 124 are provided with non-return valves 118 to prevent liquid product fed into the cylinder 114 returning into the pipes 124. Similarly, the pipes 117 are provided with non-return valves 122 to prevent liquid product expelled from the cylinder 114 into the pipes 117 returning into the cylinder 114. A PLC 121 is operatively connected to control the pneumatic operation of the piston 115 and of the filler heads 100.

In use, if one is filling a substantial number of bottles with, e.g. 200 ml of liquid product, such as shampoo, the relevant data is entered into the PC computer 121 as in the first embodiment except that in this instance one takes cognizance that one is using a double acting cylinder 114. In this example one is filling twenty (20) bottles through twenty (20) filler heads 100 through a manifold 120 as shown in the drawing or directly by connecting a bank of twenty (20) filler heads 100 to each end of the cylinder 114.

In use, when the PLC 121 actuates the pneumatically powered piston 115 forward liquid product in a measured amount is drawn into the cylinder 114 at section A through pipe 122 from the storage tank 119. The measured amount of liquid product in this instance is 4,000 ml calculated as twenty filler heads 100 each requiring 200 ml. When the piston 15 is retracted the liquid product is expelled from the cylinder 114 through pipe 117 into the manifold 120 and hence to the filler heads 100. It will be understood that as product is being expelled from section A of the cylinder, product in a measured amount is now drawn into section B of the cylinder through pipe 122 from the liquid product storage tank 119. As the piston 115 extends again the liquid product in section B is expelled from the cylinder 114 through pipe 117 into the manifold 120 and hence to the filler heads 100. The forward or extended movement of the piston 115 when expelling liquid product from section B of the cylinder 114 draws a measured quantity of liquid product from the storage tank 119 through pipe 122 into section A of the cylinder. This procedure is repeated in a continuous manner under the control of the PLC 121 to supply a continuous measured quantity (4,000 ml) of liquid product to the manifold 120 from which the twenty filler heads 100 also under the control of the PC computer 121 fills at each operation twenty (20) bottles with a measured quantity (200 ml).

It will be evident that the technique used in the Figure 1 embodiment to avoid drip from the nozzles 24, that is to say keeping the nozzles 24 open for a short time after the piston 15 starts to retract, cannot be used in this case. This is because both directions of travel of the piston 115 expel liquid to the filler heads 100. Accordingly, there may be used in this case the modified form of filler head shown in Figure 4.

The Figure 4 filler head is similar to that shown in Figure 2, except that in this case the piston 23 carries a rod 11 as in the filler head 10 of Figure 1. Further, the nozzle valve in this case comprises a valve seat which is constituted by the top portion of the cylindrical inside surface of the nozzle bore 213, and the valve head is constituted by an O-ring 214 carried by the rod 11. The valve is thus closed by the O-ring 214 entering the top portion of the nozzle bore 213 when the piston 23 makes a forward (downward) stroke, and is opened by the O-ring 214 being lifted out of the nozzle bore 213 when the piston makes a reverse (upward) stroke.

Draw back of liquid in the nozzle 24 is achieved in this case by providing that when the nozzle valve closes by the O-ring 214 entering the nozzle bore 213, the O-ring 214 first moves some distance down the bore 213, and is then retracted slightly up the bore, while still remaining within it. This retraction will, of course, provide the desired draw back of liquid.

Figure 6(c) is a timing diagram showing the operation of the Figure 3 embodiment, as controlled by the PLC 21. Line A shows the movement of the piston 115, and line B the state of the nozzles 24 of the heads 100. The signals from the sensors 35 and 36 are not shown in this case.

The start of a filling cycle occurs at time $T_0$ in Figure 6(c). Immediately prior to $T_0$ it is assumed that the piston 115 is stationary and the nozzles 24 of the filler heads 100 are closed. At $T_0$ the piston in the cylinder 32 has reached its rear datum position and the rear sensor 36 has provided a signal to the PLC 21. In response to this signal the PLC 21 changes the direction of motion of the piston 115 so that it is now put into a forward stroke, and also opens the nozzles 24.

The piston 15 now moves steadily forward, expelling liquid product from section B of the cylinder 114 through the pipes 117 to the filler head 100 where it is discharged from the nozzles 24 into respective bottles (not shown) located below the nozzles. At the same time, liquid is drawn from the storage container 119 into section A of the cylinder 114.

At time $T_1$, which is a variable period $\Delta t_3$ after $T_0$, the nozzles 24 are closed and the piston 115 halts until time $T_2$. The variable period $\Delta t_3$ is determined by the PLC 21 according to the capacity of the bottles to the filled, and like the previous embodiment is made up of a "standard" stroke period plus an additional variable period $\Delta t_1$, see Figure 6(a).

At time $T_2$ the piston starts to move in the reverse direction, and the nozzles 24 are opened. Now liquid is expelled from section A of the cylinder 114 to the filler heads 100, and liquid is drawn into section B from the container 119. At time $T_3$, a period $\Delta t_3$ after $T_2$, the nozzles are again closed and the piston 115 is halted. At time $T_4$ the cycle starts again.

In this case it is assumed that it only requires one forward or reverse stroke of the piston 115 to fill the bottles; thus two sets of bottles will be filled between $T_0$ and $T_4$, one set between $T_0$ and $T_1$ and one set between $T_2$ and $T_3$, and the wait periods from $T_1$ to $T_2$ and $T_3$ to $T_4$ give time to change the full bottles for empty bottles. Of course, if it needed more than one stroke of the piston 115 to fill a set of bottles it would only be necessary to provide a wait period at the end of the last stroke which completes filling of the bottles.

The wait period at the end of each filling operation also gives time for the slight retraction of the O-ring 214 (see Figure 4) after closure of the nozzle valve, as described above. In the example of Figure 6(c), retraction and resulting draw back of liquid in the nozzle 24 occurs during a short interval following $T_1$ and $T_3$. The degree of draw back may be determined by the PLC 121 as a function of viscosity.

It will be readily appreciated that the embodiment of Figure 3 allows for the faster filling of large quantities of containers with measured quantity of liquid product on a continuous basis. This leads to the possibility of filling substantial numbers of containers, 100 for example, at each operation, by employing a plurality of double acting displacement cylinders acting in conjunction with banks of filler heads. In such a process one would be obliged to provide PLC 121 controlled co-operating conveyor belt systems to feed the containers to the filling positions, hold them for the filling time cycle and remove them when full to the container closing and labelling operations.

In the embodiment of Figure 3 the same set of filler heads 100 are connected in common to each end of the cylinder 114 by the pipes 117. However, as an alternative each end of the cylinder 114 can be connected to its own respective set of filler heads 100 by a respective pipe 117 and manifold 120.

Turning now to Figure 5, this shows a third embodiment of the invention which is essentially two sets of apparatus as shown in Figure 1 which share a common storage container 19 and are controlled by the same PLC 21. Apart from this each apparatus is as described for Figure 1 and the same reference numerals have been used. The filler heads are not shown, but each apparatus feeds its own independent filler head(s) 10.

Each apparatus is able to be controlled independently of the other by the PLC 21. The advantage of this arrangement is that the apparatus as a whole can simultaneously fill bottles or other containers of two different sizes. Thus, for example, while one apparatus is filling 100 ml bottles the other is at the same time filling 200 ml bottles with the same liquid from the common container 19.

Further, the apparatus has applications in different industries, such as the food, cosmetic and pharmaceutical industries where filling of containers with liquid product is a common production stage.

## Claims

1. An apparatus for filling containers with a liquid, characterised by at least one filler head (10) having a closable nozzle (24), a displacement cylinder (14) having a power-actuated reciprocating piston (15), the cylinder being connected to the filler head and, through a non-return valve (18), to a storage container (19) for the liquid, and timing means (21) for controlling the opening and closing of the nozzle (24) and for controlling the length and timing of the piston (15) forward and return strokes such that a measured amount of liquid from the storage container (19) is fed through the cylinder (14) to the filler head (10) and thence through the nozzle (24) to a container.

2. An apparatus as claimed in Claim 1, wherein the nozzle (24) comprises a valve (12/13) and at least a part (22) of the nozzle extends beyond the valve, and wherein the timing means (21) controls the closing of the valve (12/13) at the end of filling a container such that liquid remaining in the nozzle (24) is drawn back into the filler head (10), but not to such an extent that air is drawn beyond the valve.

3. An apparatus as claimed in Claim 2, wherein the timing means (21) causes the valve (12/13) to remain open as the piston (15) commences a return stroke after completing a forward stroke with the valve open, the valve closing before air is drawn beyond the valve.

4. An apparatus as claimed in Claim 2, wherein the valve comprises a valve member (214) which is caused to enter the nozzle bore (213) to close it, and wherein the timing means (121) causes the valve member to retract slightly within the bore without leaving the bore.

5. An apparatus as claimed in Claim 1, wherein there are a plurality of filler heads (100) connected to the same displacement cylinder (114), all the heads being controlled by the same timing means (121).

6. An apparatus as claimed in Claim 5, wherein the displacement cylinder (114) is a double acting cylinder which has the same or a different set of filler heads (100) connected to each end, whereby in use each stroke of the piston (115) expels liquid from one end of the cylinder to a plurality of filter heads and also takes in at the other end of the cylinder liquid from the storage container.

7. An apparatus as claimed in Claim 1, including two displacement cylinders (14) each having a power-actuated reciprocating piston (15), each cylinder being connected to a respective filler head (10) and, through a respective non-return valve (18), to a common storage container (19) for the liquid, and the filler heads and displacement cylinders being controlled by a common timing means (21).

8. An apparatus as claimed in Claim 1, wherein the timing means (21) is a programmable logic controller.

9. An apparatus for filling containers with a liquid, <u>characterised by</u> at least one filler head (10) having a nozzle (24) and means (14 to 19) for feeding a measured amount of liquid to the filler head (10) and thence through the nozzle (24) to a container, the apparatus including means effective at the end of filling a container to produce a slight draw back of liquid in the nozzle.

FIG. 1

FIG. 2

FIG. 3

FIG. 4

TO FILLER HEAD(S)

TO FILLER HEAD(S)

TO FILLER HEAD(S)

FIG. 5

EP 0 479 559 A1

**FIG. 6a**

**FIG. 6b**

**FIG. 6c**

European Patent
Office

**EUROPEAN SEARCH REPORT**

Application Number

EP 91 30 8994

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 334 537 (UNILEVER PLC) | 9 | B67C3/20 |
| Y | * column 3, line 51 - column 4, line 18; figures 5,6 * | 1,2,8 | G01F11/02 |
| Y | FR-A-2 243 867 (PNEUMATIC SCALE CORPORATION) <br> * page 4, line 24 - line 36; figure 1 * | 1,2,8 | |
| Y | US-A-4 300 603 (LAUB) <br> * figure 1 * | 1 | |
| Y | FR-A-2 617 280 (GAUDIN) <br> * page 1, line 29 - line 34; figures 1,2 * | 1 | |
| X | WO-A-8 607 304 (DETEC KUNSTSTOFFTECHNIK GMBH) <br> * abstract; figure 3 * | 9 | |
| A | DE-C-880 262 (LUNDH) <br> * page 2, column 51 - column 61; figure * | 5,6 | |
| A | EP-A-0 029 634 (CONSUMERS GLASS COMPANY LIMITED) <br> * page 8, column 14 - column 18; figures 2,4 * | 5,7 | **TECHNICAL FIELDS SEARCHED (Int. Cl.5 )** <br><br> B67C <br> G01F <br> B65B |

The present search report has been drawn up for all claims

| Place of search | Date of completion of the search | Examiner |
|---|---|---|
| THE HAGUE | 15 JANUARY 1992 | MARTINEZ NAVAR |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
..........................................................................................
& : member of the same patent family, corresponding
   document

EPO FORM 1503 03.82 (P0401)